# EUROPEAN PATENT SPECIFICATION

(11) **EP 1 812 981 B1**
(45) Date of publication and mention of the grant of the patent: **02.09.2009**
(21) Application number: 05808330.4
(22) Date of filing: 16.11.2005
(51) Int. Cl.: H01M 2/12

(54) **A TYPE OF EXPLOSION PREVENTIVE BATTERY**
BATTERIE MIT EXPLOSIONSSCHUTZ
TYPE DE BATTERIE DE PREVENTION CONTRE LES EXPLOSIONS

(30) Priority: 16.11.2004 CN 200420095560 U
(43) Date of publication of application: 01.08.2007
(73) Proprietor: Byd Company Limited, Shenzhen City, Guangdong 518119 (CN)
(72) Inventor: MAO, Dehe, c/o BYD COMPANY LIMITED, Shenzhen, Guangdong Province 518119 (CN); XU, Jiaolian, c/o BYD COMPANY LIMITED, Shenzhen, Guangdong Province 518119 (CN); ZHANG, Zhongtao, c/o BYD COMPANY LIMITED, Shenzhen, Guangdong Province 518119 (CN)
(74) Representative: Karlsson, Leif Gunnar Börje
(86) International application number: PCT/CN2005/001931
(87) International publication number: WO 2006/053493

(56) References cited:
- EP-A- 1 258 931
- CN-A- 1 386 307
- CN-Y- 2 373 901
- JP-A- 2000 223 102
- JP-A- 2001 035 467
- JP-A- 2001 143 664
- JP-A- 2002 237 283

## Description

### Cross Reference

This application claims priority from a Chinese patent application entitled "A Type of Explosion Preventive Battery" filed on November 16, 2004, having a Chinese Application No. 200420095560.1.

### FIELD OF INVENTION

This invention involves a type of battery, and, in particular, a type of battery having explosion-preventive or pressure releasing features.

### BACKGROUND TECHNOLOGY

With science and technology rapidly moving forward, the miniaturization of electronic instrument and equipment requires higher capability batteries. In recent years, with the common adoption of devices such as mobile phones, laptop computers, and PDAs, different types of non-aqueous electrolyte batteries of light-weight and high-density have been developed. Generally speaking, from a combined function and feature point of view, lithium-ion batteries possess the most promising development and application prospects among all high-capacity batteries. Currently, the most widely manufactured lithium-ion batteries are square batteries having rectangular shells containing pressed electrode core made from separator, winding type-belt shaped positive and negative electrodes.

The electrode core of regular lithium-ion batteries are protected with protective circuit board. In the event of a short circuit or circuit board malfunction, there is a danger of explosion and damages to the electronic device, even causing injuries to the user. As a measure of raised safety standards, batteries of improved safety have an explosion release valve located on the battery cover or have cut grooves on the battery shell. When the battery is subjected to shock or short circuiting due to shorted electrical current, and when the pressure inside the battery builds up, the pressure will be discharged through the explosion release valve or through the breakage of the groove on the body of the shell, achieving the goal of releasing the pressure.

The way of creating an explosion release valve on the cover is by punching an oval-shaped hole on the cover. Then a layer of thin aluminum foil is combined with the cover in vacuum. Such technique requires complicated manufacturing process and higher costs.

Another way of releasing the pressure is by creating a groove on the rectangular shell, which means using a machine to press on the surface of the shell and create a groove of certain depth. Since the shell is thinner at the groove, when the air pressure inside the battery increases due to a short circuit, the pressure will break the shell at the thin groove and escape, achieving the goal of pressure release.

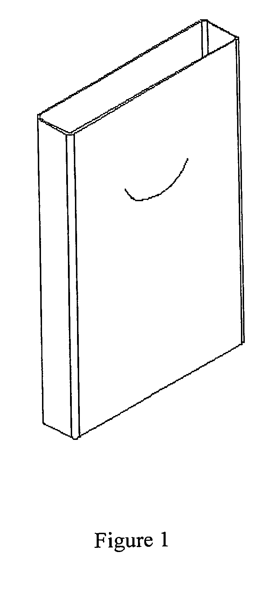

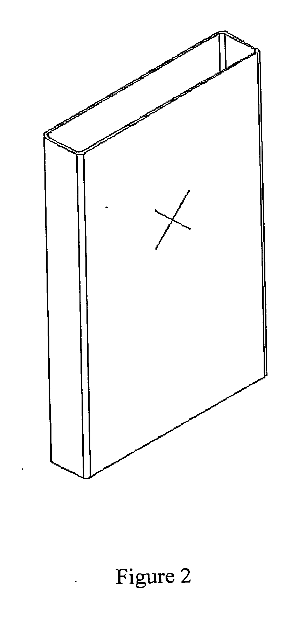

Currently, the main way of creating an explosion-preventive groove is by pressing at the center of the large surface resulting in a groove of an "X" shape or an arc shape, as shown in Figure 1 and Figure 2.

However, the above mentioned structures all have the flaws of having difficulty in completely releasing the pressure, and therefore not being safe. Because the rectangular shell contains an electrode core formed by pressed, winding type positive and negative electrodes, the thickness of the current collector falls between 0.075-0.1mm. In the event of a short circuit, vast amount of air inside the shell will break through the groove and at the same time pushing the electrode plates towards the rift, therefore blocking the rift and causing an explosion.

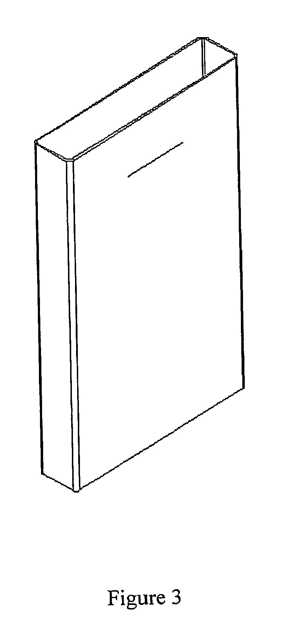

There exists another way in creating a groove by pressing on the large rectangular surface of the shell close to the open end of the shell to resulting in, for example, a groove with the shape of "-----"as shown in Figure 3. Although such technique improves the safety to a certain extent, it does not achieve the goal of complete pressure release because a groove at such location is not prone to breaking from the pressure inside the shell.
A further embodiment, exhibiting an explosion-preventive groove in the lid of the battery, is disclosed in JP-2002-237 283 A.

### SUMMARY OF THE INVENTION

Due to the flaws of the above mentioned technologies, this invention seeks to solve the technical problem by providing a safer type of battery having explosion-preventive features.

The invention comprises the following:

A type of battery having explosion preventive features, including a rectangular shell with an open end, the open end sealable by a battery cover. An explosion-preventive groove located on the large rectangular surface of the rectangular shell, with at least one point of the explosion-preventive groove located on an diagonal of the large rectangular surface, where the distance between the endpoint of the diagonal and the intersection point of the said explosion-preventive groove with the diagonal being less than one third (1/3) of the length of the diagonal. The explosion-preventive groove has at least one point situated on the outer surface of the shell of the battery, which covers a space between the battery cover and the electrode core.

The present invention provides that the distance between the endpoint of the diagonal and the crossover of the said explosion-preventive groove with the diagonal is less than one fifth (1/5) of the length of the diagonal.

The explosion-preventive groove of this invention has the letter "L" shape with the turning point located on the diagonal.

Compared with the existing technology, a battery of this invention has the following advantages:

An explosion-preventive groove is located on the diagonal of the large rectangular surface of the rectangular battery shell, with the distance between an endpoint of the diagonal and the crossover of the said explosion-preventive groove with the diagonal being less than one third of the length of the diagonal. Therefore, as pressure is being released, the design effectively prevents pressure from pushing the flat electrode core and blocking the rift, achieving complete venting of the air pressure and avoiding an explosion.

During the manufacturing process, a support frame is often inserted into the battery shell to minimize deformation. By placing the explosion-preventive groove on the diagonal one third of its length away from the opening of the shell, a relatively long support frame cantilever can be avoided, and therefore, there will be no deformation as the groove is created by the way of pressing, affecting the consistency in the depth of the groove.

By placing the explosion-preventive groove on the diagonal one third of its length away from the opening of the shell, and using the space between the insulated separator and the cover, when the explosion-preventive groove is fractured, the electrode core will not block the rift, achieving the goal of complete pressure release.

The following are further descriptions of the invention with references to figures and examples of application.

### DESCRIPTIONS OF THE DRAWINGS

Figure 1 is an illustration of a rectangular battery shell with an explosion-preventive groove of the prior art.

Figure 2 is an illustration of another rectangular battery shell with an explosion-preventive groove of the prior art.

Figure 3 is an illustration of another rectangular battery shell with an explosion-preventive groove of the prior art.

Figure 4 is an illustration of a rectangular battery of an embodiment of the invention.

Figure 5 is a partial longitudinal sectional view of the internal structure of the battery shown in Figure 4.

Figure 6 is an illustration of another rectangular battery of an embodiment of the invention.

Callouts of the Figures
1-rectangular shell; 2--battery cover; 4--electrode core; 6--explosion-preventive groove on the rectangular shell; 8-a point on the explosion-preventive groove; 10-diagonal; 14-explosion-preventive valve on the battery cover; 16-insulated separator; 18-the first line of the right angle; 20-the second line of the right angle; 22-the endpoint of the second line of the right angle

### DETAILED DESCRIPTION OF THE PREFERRED EMBODIMENTS

To solve the technical problem, through observation and repeated experiments, the inventor of this invention noticed that as a rectangular shell is inflated, the inflation happened more quickly along the diagonal of the shell's large rectangular surface. Therefore, the basic concept of this invention is to locate the explosion-preventive groove along the diagonal of the large rectangular surface of the rectangular shell.

The invention comprises of the following:

A type of battery as defined in claim 1.

The present invention provides that the distance between the endpoint of the diagonal and the crossover of the said explosion-preventive groove with the diagonal is less than one fifth (1/5) of the length of the diagonal.

The endpoint of the diagonal of this invention is the endpoint at the open end of the shell, meaning the distance between the endpoint of the diagonal at the open end of the shell and the point intersection the explosion-preventive groove located on the diagonal is less than one third (1/3) of the length of the diagonal, and preferably less than one fifth (1/5).

The said explosion-preventive groove of this invention has at least one point located in the space between the battery cover and the electrode core.

The explosion-preventive groove of this invention has the letter "L" shape with the turning point located on the diagonal.

The two lines forming the right-angled groove having the shape of the letter "L" are respectively parallel to the two edges of the right angle of the large rectangular surface of the rectangular shell; preferably, the groove having the shape of the letter "L" has its first line forming the right angle parallel to the edge of the right angle of the large rectangular surface on the open end of the rectangular shell, and the second line forming the right angle of the groove pointing to the open end of the shell; also preferably, the second line forming the right-angled groove having the shape of the letter "L" has an endpoint located in the interval between the battery cover and electrode core.

Also, the said groove having the shape of the letter "L" can have one of the lines forming located on the diagonal, with the other line in a right angle being vertical to the diagonal.

The explosion-preventive device for the purpose of releasing pressure and preventing explosion can be installed on the battery cover of this invention.

For insulation purposes, an insulated separator is installed between the said battery cover and the rectangular shell containing the electrode core.

In the rectangular shell of the battery, an insulated separator is installed on the bottom of the battery core for the purposes of shock prevention and insulation.

There is no special requirement in choosing the above mentioned battery components.

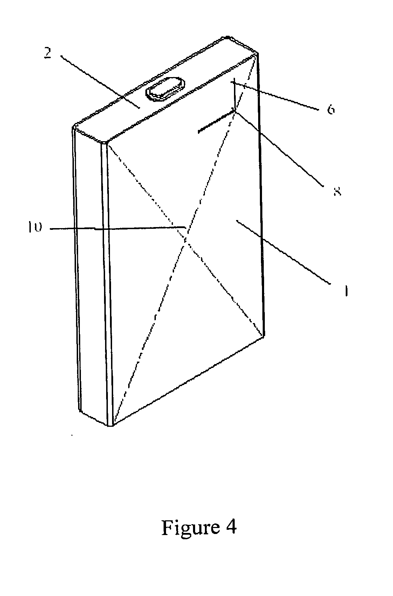

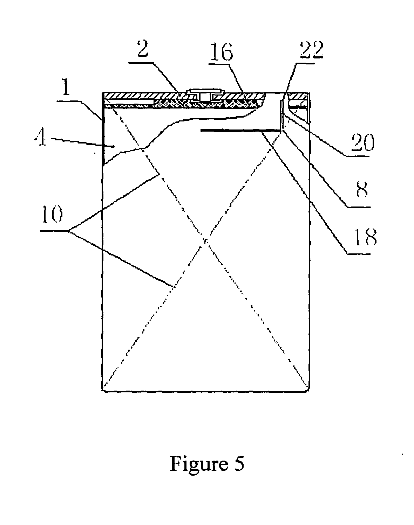

A lithium-ion secondary battery as shown in Figure 4 and Figure 5, comprising a battery electrode core (4), a rectangular shell (1), and electrolyte, in which the electrode core (4) is formed by stacking and rolling up the positive electrode, negative electrode, and separator. An electrode core (4) is contained in the rectangular shell (1), which is sealed with battery cover (2). An explosion-preventive groove (6) in the shape of the letter "L" is located on the outer surface of the rectangular surface of the rectangular shell (1), with the turning point (8) of the explosion-preventive groove lying on an diagonal of the rectangular surface, and with the distance between the endpoint of the diagonal (10) at the open end of the shell and the turning point (8) being one fifth of the length of the diagonal. The two lines (18, 20) forming the right angle of the groove of the shape of the letter "L" are respectively parallel to the two right-angled edges of the large rectangular surface of the rectangular shell. The first line (18) forming the right angle of the groove is parallel to the edge forming the right angle of the large rectangular surface at the open end of the rectangular shell, and the second line (20) forming the right angle of the groove points towards the open end of the shell, with an endpoint (22) of the second line (20) forming the right angle located in the interval between battery cover (2) and the electrode core (4). Insulated separator (16) is also installed in the interval between the battery cover (2) and the electrode core (4) inside the shell. When the explosion-preventive groove is fractured, the electrode core will not block the rift, achieving the goal of complete pressure release.

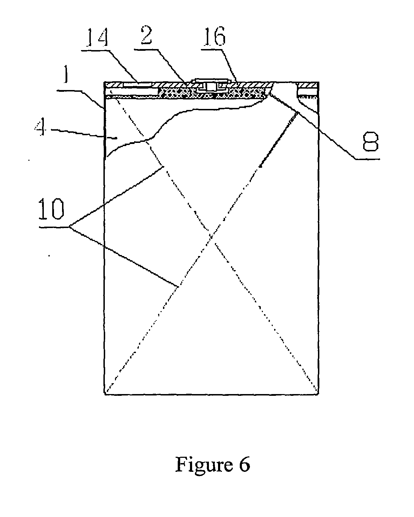

A lithium-ion secondary battery as shown in Figure 6 comprises a battery core (4), a rectangular shell (1) and electrolyte. The battery core (4) is contained inside the shell which is sealed with battery cover (2), with the said battery cover (2) having an explosion-preventive valve (14) for the purpose of releasing pressure and preventing explosion, bearing the function of a secondary safety measure. An explosion-preventive groove (6) of the shape of the letter "L" is located on the outer surface of the layer square face of the rectangular shell (1), with a line forming the right angle of the explosion-preventive groove (6) located on the diagonal, and with the distance between the endpoint of the diagonal at the open end of the shell and the point of explosion-preventive groove located on the diagonal not exceeding 1/4. The other line forming the right angle of the explosion-preventive groove is vertical to the diagonal, with the endpoint of the line located in the interval between battery cover (2) and electrode core (4). An insulated separator (16) is also installed in the interval between battery cover (2) and electrode core (4) inside the shell. When the explosion-preventive groove is fractured, the electrode plate will not block the rift, achieving the goal of complete pressure release.

This invention is not limited to the above mentioned preferred embodiments. For example, inside the said rectangular shell, a insulated separator can be installed on the bottom of the electrode core for the purposes of shock prevention and insulation. An explosion-preventive groove can also be located on the diagonal close to the bottom of the battery or on a lateral surface of the shell, adapting in accordance to the different internal structures of the battery. In addition, the shape of the above mentioned explosion-preventive groove is not limited to the shape of the letter "L", and it can include other geometrical shapes, and the effect can be achieved as long as the design as a whole satisfies the idea of this invention.

While the present invention has been described with reference to certain preferred embodiments, it is to be understood that the present invention is not limited to such specific embodiments. Rather, it is the inventor's contention that the invention be understood and construed in its broadest meaning as reflected by the following claims.

## Claims

1. A battery, comprising:
a rectangular shell having an open end;
an electrode core placed in the shell;
a battery cover, having an electrode terminal thereon, said battery cover being sealable with said open end of the shell; and
an explosion-preventive groove situated on a surface of the shell;
wherein said explosion-preventive groove having at least at one point intersecting a diagonal of the surface of the shell; and the distance between an endpoint of the diagonal and the intersecting point being less than one third (1/3) of the length of the diagonal;
and wherein the explosion-preventive groove has at least one point situated on the outer surface of the shell of the battery, which covers a space between the battery cover and the electrode core.

2. The battery of claim 1 wherein the distance between an endpoint of the diagonal and the intersecting point being less than one fifth (1/5) of the length of the diagonal.

3. The battery of claim 1 wherein the explosion-preventive groove is in the shape of letter "L" and has its turning point lying on the diagonal.

4. The battery of claim 3 wherein the two lines forming the right-angled groove in the shape of letter "L" are respectively parallel to two edges of the shell.

5. The battery of claim 3 wherein the groove in the "L" shape has its first line parallel to an edge of the shell, and its second line forming the right angle of the groove pointing to the open end of the shell.

6. The battery of claim 5 wherein the second line forming the right angle of the groove has an endpoint located between the battery cover and the electrode core.

7. The battery of claim 3 wherein the groove in the "L" shape has one of the lines forming on the diagonal, with the other line being perpendicular to the diagonal.

8. The battery of claim 1 wherein an explosion-preventive device for pressure release and explosion prevention is installed on the battery cover.

## Patentansprüche

1. Batterie, die Folgendes umfasst:
- ein rechteckiges Gehäuse mit einem offenen Ende,
- ein Elektrodenkern, der in dem Gehäuse angeordnet ist,
- eine Batterieabdeckung mit einem darauf angeordneten Elektrodenterminal, wobei die Batterieabdeckung mit dem offenen Ende des Gehäuses versiegelbar ist und
- eine Explosionsverhinderungskerbe, die auf einer Oberfläche des Gehäuses angeordnet ist,
wobei die Explosionsverhinderungskerbe wenigstens in einem Punkt eine Diagonale auf der Oberfläche des Gehäuses schneidet und die Entfernung zwischen einem Endpunkt der Diagonalen und dem geschnittenen Punkt weniger als ein Drittel (1/3) der Länge der Diagonalen beträgt und
die Explosionsverhinderungskerbe wenigstens einen Punkt aufweist, der auf der äußeren Oberfläche des Gehäuses der Batterie angeordnet ist, welches einen Raum zwischen der Batterieabdeckung und dem Elektrodenkern abdeckt.

2. Batterie nach Anspruch 1, wobei die Entfernung zwischen einem Endpunkt der Diagonalen und dem geschnittenen Punkt weniger als ein Fünftel (1/5) der Länge der Diagonalen beträgt.

3. Batterie nach Anspruch 1, wobei die Explosionsverhinderungskerbe die Form des Buchstabens "L" aufweist und deren Wendepunkt auf der Diagonalen liegt.

4. Batterie nach Anspruch 3, wobei die zwei Linien, die die rechtwinklige Kerbe in Form des Buchstabens "L" bilden, jeweils parallel zu den zwei Kanten des Gehäuses verlaufen.

5. Batterie nach Anspruch 3, wobei die erste Linie der Kerbe in "L"-Form parallel zu der Kante des Gehäuses verläuft und die zweite Linie, die den rechten Winkel der Kerbe bildet, in Richtung des offenen Endes des Gehäuses zeigt.

6. Batterie nach Anspruch 5, wobei die zweite Linie, die den rechten Winkel der Kerbe bildet einen Endpunkt aufweist, der sich zwischen der Batterieabdeckung und dem Elektrodenkern befindet.

7. Batterie nach Anspruch 3, wobei die Kerbe in "L"-Form eine Linie aufweist, die auf der Diagonalen gebildet ist und die andere Linie senkrecht zu der Diagonalen liegt.

8. Batterie nach Anspruch 1, wobei eine Explosionsverhinderungsvorrichtung zur Druckentlastung und Explosionsverhinderung auf der Batterieabdeckung angebracht ist.

## Revendications

1. Batterie, comprenant :
un boîtier rectangulaire comportant une extrémité ouverte ;
un noyau d'électrode placé dans le boîtier ;
un couvercle de batterie, comportant une borne d'électrode sur celui-ci, ledit couvercle de batterie pouvant être fermé avec ladite extrémité ouverte du boîtier ; et
une rainure de prévention contre les explosions située sur une surface du boîtier ;
dans laquelle ladite rainure de prévention contre les explosions comporte au moins un point d'intersection avec une diagonale de la surface du boîtier ; et la distance entre un point d'extrémité de la diagonale et le point d'intersection est inférieure à un tiers (1/3) de la longueur de la diagonale ;
et dans laquelle la rainure de prévention contre les explosions comporte au moins un point situé sur la surface extérieure du boîtier de la batterie, qui couvre un espace entre le couvercle de la batterie et le noyau d'électrode.

2. Batterie selon la revendication 1, dans laquelle la distance entre un point d'extrémité de la diagonale et le point d'intersection est inférieure à un cinquième (1/5) de la longueur de la diagonale.

3. Batterie selon la revendication 1, dans laquelle la rainure de prévention contre les explosions a la forme d'un L et a son point de rotation qui repose sur la diagonale.

4. Batterie selon la revendication 3, dans laquelle les deux lignes formant la rainure à angle droit de la forme d'un L sont respectivement parallèles aux deux bords du boîtier.

5. Batterie selon la revendication 3, dans laquelle la rainure en forme de L comporte sa première ligne parallèle à un bord du boîtier, et sa seconde ligne formant l'angle droit de la rainure pointant vers l'extrémité ouverte du boîtier.

6. Batterie selon la revendication 5, dans laquelle la seconde ligne formant l'angle droit de la rainure a un point d'extrémité situé entre le couvercle de la batterie et le noyau d'électrode.

7. Batterie selon la revendication 3, dans laquelle la rainure en L a l'une des lignes formée sur la diagonale, l'autre ligne étant perpendiculaire à la diagonale.

8. Batterie selon la revendication 1, dans laquelle un dispositif de prévention contre les explosions pour la libération de la pression et la prévention contre les explosions est installé sur le couvercle de la batterie.
